Europäisches Patentamt

European Patent Office

Office européen des brevets

(11) Publication number: 0 170 032
A1

# EUROPEAN PATENT APPLICATION

(21) Application number: 85107656.2

(22) Date of filing: 20.06.85

(51) Int. Cl.⁴: G 11 B 5/035
H 04 N 9/83

(30) Priority: 22.06.84 JP 92465/84 U

(43) Date of publication of application:
05.02.86 Bulletin 86/6

(84) Designated Contracting States:
DE FR GB IT

(71) Applicant: HITACHI, LTD.
6, Kanda Surugadai 4-chome Chiyoda-ku
Tokyo 100(JP)

(72) Inventor: Kikkawa, Kanji
9-15, Sasanocho-3-chome
Katsuta-shi(JP)

(72) Inventor: Hirano, Masaaki
426-3, Tabiko
Katsuta-shi(JP)

(74) Representative: Altenburg, Udo, Dipl.-Phys. et al,
Patent- und Rechtsanwälte
Bardehle-Pagenberg-Dost-Altenburg-Frohwitter &
Partner Postfach 86 06 20
D-8000 München 86(DE)

(54) Magnetic recording-reproducing apparatus.

(57) A magnetic recording-reproducing apparatus is disclosed, in which a recording current equivalent section (28) is inserted in the stage before or after a recording amplifier section (15). The section (28) thereby amplifies high frequencies of the recording current to compensate for the attenuation at reproduction, and thus improves the signal-to-noise-ratio.

FIG. II

Hitachi, Ltd.                    A 6324-EP **0170032**

## MAGNETIC RECORDING-REPRODUCING APPARATUS

FIELD OF THE INVENTION

The present invention relates to a magnetic recording-reproducing apparatus for recording and/or reproducing an audio signal by frequency modulation, or more in particular to such an apparatus wherein the decrease in the level of the frequency components of an FM audio signal that occurs during reproduction is compensated for during recording.

Recently, a magnetic recording-reproducing apparatus called a Hi-Fi video tape recorder capable of high-fidelity reproduction of an audio signal in which the audio signal is recorded by the rotary head together with the video signal is closely watched. The magnetic recording-reproducing apparatus of this type comprises a rotary head exclusively used for recording and reproducing the video signal and a rotary head exclusive to recording and reproduction of the audio signal, so that recording tracks for the video signal and the audio signal are formed to each other diagonally of the magnetic tape in the longitudinal direction thereof, the audio signal and the video signal being recorded in a deep magnetic layer and a shallow magnetic layer of the magnetic tape respectively.

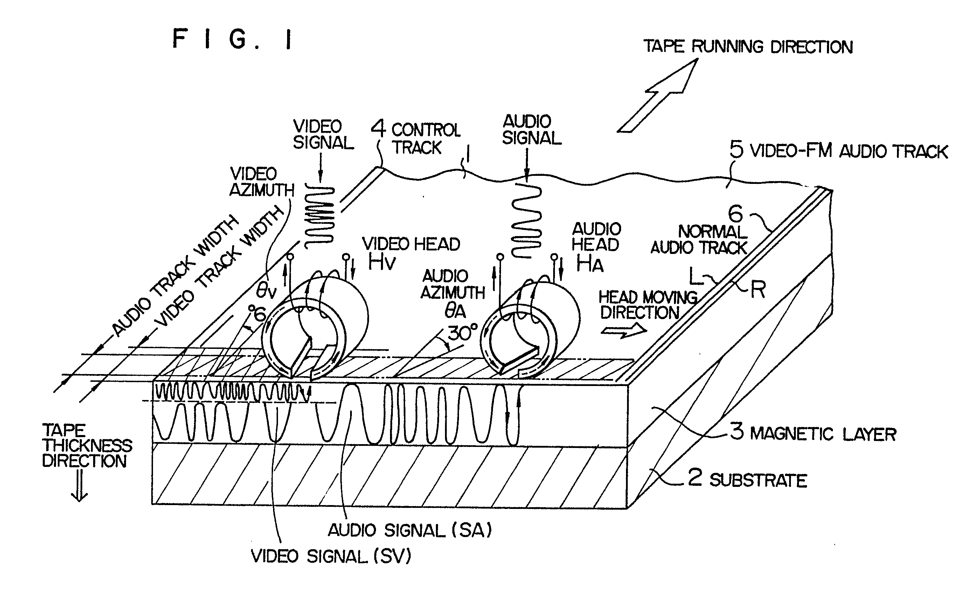

A method of recording audio and video signals in a magnetic recording and reproducing apparatus called a Hi-Fi video tape recorder is illustrated in Fig. 1. The diagram of Fig. 1 includes sectional views of a video magnetic tape 1 along the running direction and along the thickness thereof. Along the tape thickness, a magnetic layer 3 is coated on a substrate 2 and is magnetized by a video head HV or an audio head HA. The tape 1 includes a control track 4, a video-FM audio track 5 and a normal audio track 6 used also for stereo. This tape format is the same as a video tape thus far used except that a video track is also used for an FM audio track.

The video head HV and the audio head HA are arranged in a manner to pass the same point as shown in Fig. 1, and the audio head HA starts the recording before the video head HV. An audio signal SA which is FM-modulated is recorded through the audio head HA deeply in the magnetic layer 3 of the magnetic tape 1, and therefore this recording is called "the deep layer recording".

Next, with a predetermined time delay, the video head HV begins recording. A combined video signal including an FM-modulated luminance signal superimposed with a color signal is recorded through the video head HV on the FM audio signal recorded immediately before. At this time, the video signal SV recorded by the video head HV is recorded only in the surface of the magnetic layer 3, and the FM audio signal recorded in the deep layer, though erased partially in the surface thereof, remains recorded in the deep layer, thereby making it possible to take out the video signal SV and the audio signal SA independently of each other.

Further, as shown in Fig. 1, the video head HV and the audio head HA have different azimuths θA and θV to reduce interferences with each other.

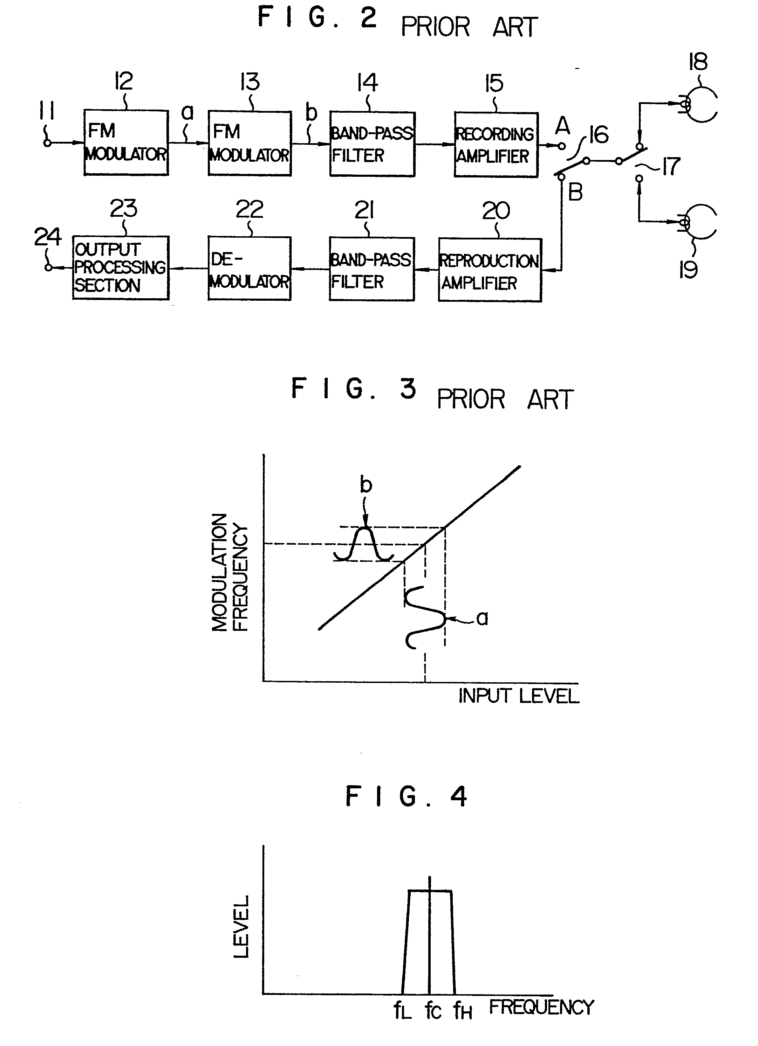

Fig. 2 is a block diagram showing an example of this conventional magnetic recording-reproducing apparatus. In Fig. 2, reference numeral 11 designates an input terminal, numeral 12 an input processing section, numeral 13 an FM modulator, numeral 14 a band-pass filter, numeral 15 a recording amplifier section, numeral 16, 17 switches, numeral 18, 19 rotary heads, numeral 20 a reproduction amplifier section, numeral 21 a band-pass filter, numeral 22 an FM demodulator section, numeral 23 an output processing section, and numeral 24 an output terminal.

In this diagram, the audio signal applied from the input terminal 11, after being subjected to such a process as pre-emphasis at the input processing section 12, is supplied to and FM-modulated at the FM modulator section 13. The FM modulator section 13 has an input-output modulation characteristic shown in Fig. 3 and produces an FM audio signal, that is, a signal $\underline{b}$ of a frequency changing with the amplitude of an input audio signal $\underline{a}$. The frequency spectrum of this FM audio signal, as shown in Fig. 4, has a side band wave on both sides of the central carrier frequency $f_C$, and various frequency components between the lower-limit frequency $f_L$ and upper limit frequency $f_H$ of the sideband waves. The FM audio signal $\underline{b}$ is made up of the sum of Fourier series of these frequency components.

The unrequired components of this FM audio signal $\underline{b}$ are removed at the bandpass filter 14, and the resultant signal is amplified at the recording amplifier section 15 and applied to the switch 17 through the switch 16 which is closed on a contact A.

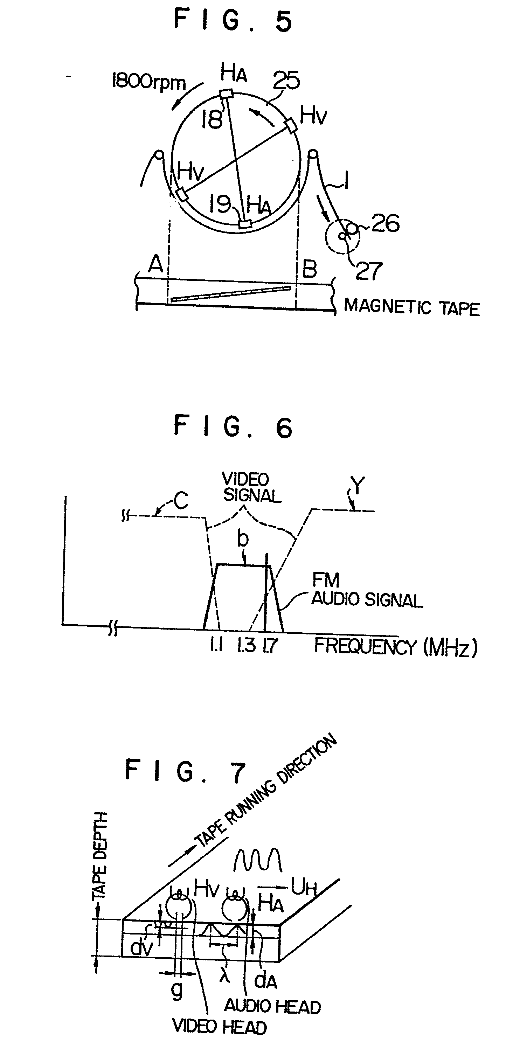

A configuration of a rotary cylinder as viewed from above is shown in Fig. 5.

In Fig. 2, the rotary heads 18, 19 are mounted on a rotary cylinder 25 carrying a rotary heads exclusive to recording and reproduction of video signal, are adapted to rotate with a period (1/30 second) equal to one frame period of the video signal, and scan the magnetic tape 1 alternately for each half revolution (1/60 second) of the rotary cylinder 25.

In Fig. 5, the magnetic tape 1 is wound by slightly more than 180 degree on the rotary cylinder 25, and is fed at constant rate by a pinch roller 26 and a capstan 27. The rotary cylinder 25 carries the audio heads HA (18, 19) and the video heads HV, and rotates at the rate of 1800 r.p.m. to scan from point A to point B at intervals of 1/60 second. Both the video heads HV and the audio heads HA are arranged in a pair disposed 180 degree opposite to each other, so that one reaches point B and is separated from the magnetic tape at the same time that the other reaches point A, thus alternately keeping in contact with the magnetic tape 1 for recording or reproduction.

In Fig. 2, the switch 17 is operated synchronously with the rotation of the rotary cylinder 25, and is adapted to be sequentially switched to close on the side of the rotary head 18 or 19 scanning the magnetic tape 1. As a result, the FM audio signal is recorded on the magnetic tape 1 alternately by the rotary heads 18 and 19.

Since the magnetic tape 1 is wound on the rotary cylinder 25 only by 180 degree as shown in Fig. 5, the recording operation would be disconnected every half rotation if only one head is provided. Accordingly, a pair of heads arranged 180 degree opposite to each other eliminate this inconvenience by keeping one of the heads scanning the magnetic tape.

Although the recording signal flows in both of the rotary heads 18 and 19, the actual recording is effected from the rotary head scanning the magnetic tape 1 onto the magnetic tape 1. In other words, a pair of rotary heads 18 and 19 scan the magnetic tape 1 to record alternately at intervals of 1/60 second.

In reproduction mode, the switch 16 in Fig. 2 is closed on the contact B, and the switch 17 operates in the same manner as in recording mode.

Then, the FM audio signal recorded in the magnetic tape 1 is reproduced by the rotary heads 18 and 19 alternately and is amplified at the reproduction amplifier section 20 through the switch 16. The FM audio signal thus amplified is applied to the bandpass filter 21 where the unrequired components thereof are eliminated, and the resulting FM audio signal is applied to the FM demodulator section 22 for demodulation. Further, the signal from the section 22 is subjected to such process as de-emphasis at the output processing section 23, with the result that the original audio signal is produced at the output terminal 24.

In this magnetic recording-reproducing apparatus, as described above with reference to Fig. 1, the video signal is recorded in the shallow part of the magnetic layer 3 of the magnetic tape 1, the FM audio signal in the deep part thereof, so that the recording track for the video signal and the one for the FM audio signal are formed one on the other on the magnetic tape 1.  As a result, in reproducing the video signal by the rotary head exclusive to the recording and reproduction of the video signal, the FM audio reproduction signal recorded in the deep part of the magnetic layer 3 is reproduced to some degree at the same time on the one hand, while the video signal is simultaneously reproduced at the time of reproduction of the FM audio signal by the rotary heads, 18, 19 on the other hand.  In order to remove the unnecessary FM audio signal or video signal from the reproduction signal produced by the rotary heads, therefore, the frequency bands of the video signal and the FM audio signal are normally differentiated.

Fig. 6 is a diagram for explaining the relationship between the frequency bands of the video signal and the FM audio signal, in which the dashed line represents the video signal and the solid line the FM audio signal. In Fig. 6, the video signal to be recorded and reproduced contains an FM-modulated luminance signal Y and a carrier chrominance signal converted to low band, and the frequency band of this luminance signal Y is set on high frequency side of the carrier chrominance signal C.  The frequency band of the FM audio signal $\underline{b}$, on the other hand, is set in the margin between the frequency bands of the luminance signal Y and the carrier chrominance signal C.

In the magnetic recording-reproducing apparatus for recording and reproducing a video signal in this manner, the frequency band of the luminance signal Y and that of the carrier chrominance signal C are standardized, and therefore the frequency band of the FM audio signal $\underline{b}$ to be set is accordingly determined. As an example, the lower frequency of the luminance signal Y takes the value of about 1.3 MHz, and the upper frequency of the carrier chrominance signal C about 1.1 MHz, so that the frequency band of the FM audio signal $\underline{b}$ is required to be set between about 1.1 MHz and about 1.3 MHz. It is, however, difficult to set the frequency band of the FM audio signal $\underline{b}$ in such a narrow range, and especially, it is impossible to so set when the audio signal is a stereo signal. Generally, therefore, the frequency band of the FM audio signal $\underline{b}$ is allowed to partially double with that of the luminance signal Y and the carrier chrominance signal C (In the case where the audio signal is a stereo signal, for instance, a central carrier frequency of the FM audio signal is set at 1.7 MHz somewhat higher than the lower frequency about 1.3 MHz of the luminance signal Y). In compensation, the level of the FM audio signal is reduced below that of the luminance signal Y and the carrier chrominance signal C in order for the FM audio signal $\underline{b}$ not to interfere with the luminance signal Y or the carrier chrominance signal C.

- 8 -                    0170032

If the FM audio signal $\underline{b}$ is to be recorded in the deep part of the magnetic layer 3 of the magnetic tape 1, on the other hand, the gap length $\underline{g}$ of the rotary head 18, 19 is required to be increased.

The relative positions of the video head HV and the audio head HA are shown in Fig. 7.

In Fig. 7, the video head HV and the audio head HA scan the magnetic tape 1 diagonally, while recording the recording signal of frequency $\underline{f}$, so that the video signal is recorded at the depth dV of the magnetic tape 1 and the audio signal at the depth dA of the magnetic tape 1. Let $\lambda$ be the recording wavelength, and $v_H$ the relative speed of the rotary head against the magnetic tape 1, and the recording wavelength $\lambda$ is given as

$$\lambda = \frac{v_H}{f} \qquad \ldots\ldots\ldots\ldots\ldots (1)$$

Further, the relationship between the recording wavelength $\lambda$ and the gap length $\underline{g}$ of the recording rotary head is expressed as

$$\frac{\lambda}{2} = g \qquad \ldots\ldots\ldots\ldots\ldots (2)$$

According to the references so far disclosed, the recording depth is approximately 1/3 - 1/4 of the recording wavelength $\lambda$. If the recording wavelength is lengthened, therefore, the video signal is recorded deeper, by increasing the gap length $\underline{g}$, the same effect is obtained equivalently.

0170032

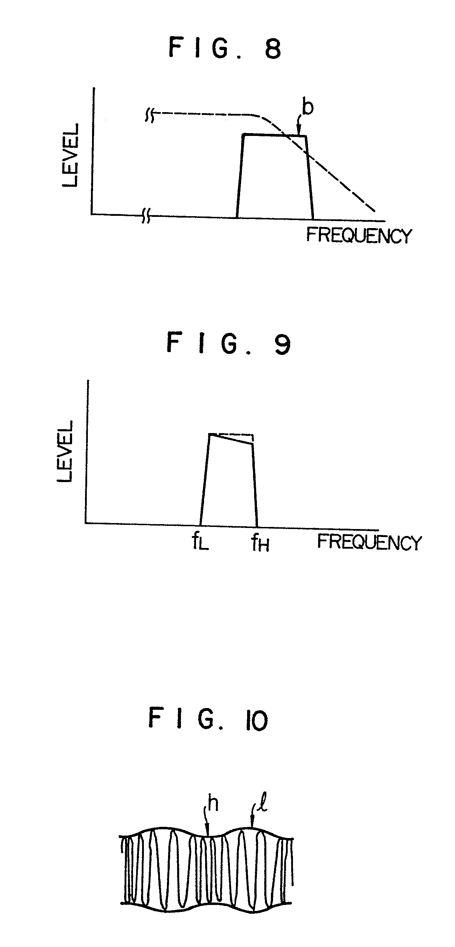

If the gap length g of the rotary heads 18, 19 is increased, however, the band recordable by the rotary heads 18, 19 and the tape 1 is narrowed. If it is desired to reproduce the FM audio signal at high level, the AM audio signal is required to be recorded as deep into the deep part of the magnetic layer 3 as possible. As a result, as shown in Fig. 8, the frequency band of the FM audio signal b is set near the upper limit of the recordable band of the head tape system shown by the dashed line.

The FM audio signal b is thus affected by the characteristics near the upper limit of the recordable band by recording and reproduction, and the high frequency components are attenuated more in level as shown by the solid line as against the dashed line representing the recording level in Fig. 9. The result is that as shown in Fig. 10, the reproduced FM wave of the audio signal has a large amplitude at the low frequency portion ℓ thereof and a small amplitude at the high frequency portion h thereof. This amplitude change deteriorates the signal-to-noise ratio of the audio signal demodulated. Specifically, the signal-to-noise ratio of the audio signal has a correlationship with the amplitude of the signal reproduced from the magnetic tape 1, or generally with C/N (carrier wave to noise ratio), and therefore the ratio C/N is deteriorated at the portions of a small amplitude, thus deteriorating the signal-to-noise ratio.

SUMMARY OF THE INVENTION

The primary object of the present invention is to provide a magnetic recording-reproducing apparatus in which the variation of the level of the FM audio signal with the frequency components is prevented thereby to reproduce an audio signal of a high S/N by compensating, at the time of recording, for the reduction in the level of the frequency components of the FM audio signal caused during reproduction.

Another object of the present invention is to provide a magnetic recording-reproducing apparatus in which the envelope of the reproduced FM audio signal can be flatenned without being affected by the characteristics of the head tape system, thereby reproducing the audio signal at satisfactory signal-to-noise ratio.

BRIEF DESCRIPTION OF THE DRAWINGS

Fig. 1 is a diagram showing a method of recording a video signal and an audio signal in a magnetic recording-reproducing apparatus according to the prior art and the present invention.

Fig. 2 is a block diagram showing an example of a conventional magnetic recording-reproducing apparatus.

Fig. 3 shows an input-output modulation characteristic of the FM modulator section in Fig. 2.

Fig. 4 shows a frequency spectrum of the FM audio signal in recording mode in Fig. 2.

Fig. 5 is a diagram showing a configuration of a

- 11 -

0170032

rotary cylinder used for a magnetic recording-reproducing apparatus according to the prior art and the present invention.

Fig. 6 is a diagram for explaining an example the relationship of frequency bands between the video signal and FM audio signal.

Fig. 7 is a diagram showing the relative positions of the video head and the audio head.

Fig. 8 is a diagram for explaining the relationship between a recordable frequency band and the frequency band of the FM audio signal.

Fig. 9 shows a frequency spectrum of a reproduced FM audio signal.

Fig. 10 shows a waveform of the reproduced FM audio signal.

Fig. 11 is a block diagram showing a magnetic recording-reproducing apparatus according to the present invention.

Fig. 12 shows a characteristic of a recording current equivalent section.

Fig. 13 is a diagram showing a frequency spectrum of the FM audio signal reproduced.

Fig. 14 is a circuit diagram showing a specific example of the recording current equivalent section shown in Fig. 11.

Fig. 15 is a block diagram showing a magnetic recording-reproducing apparatus according to an embodiment of the present invention.

DESCRIPTION OF THE PREFERRED EMBODIMENTS

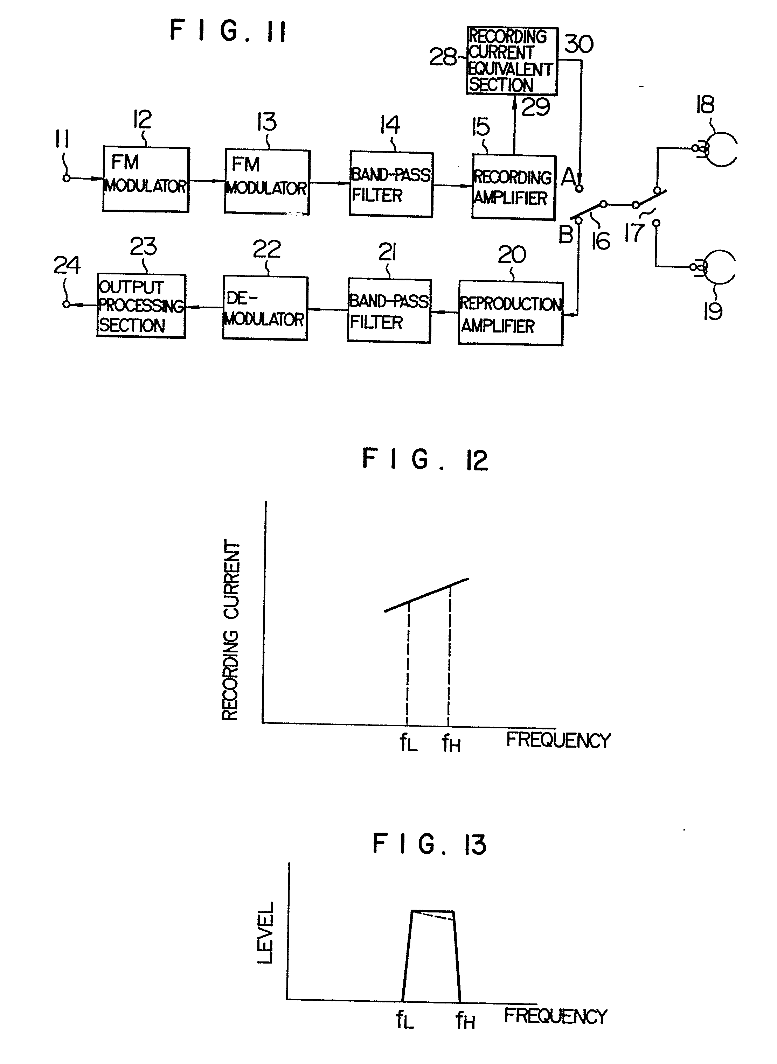

The block diagram of Fig. 11 shows a magnetic recording-reproducing apparatus according to the present invention. In Fig. 11, reference numeral 28 designates a recording current equivalent section, in which parts corresponding to those in Fig. 2 are designated by the same numerals as those in Fig. 2.

The configuration and operation of this embodiment is identical to those of the prior art shown in Fig. 2 except that in Fig. 11 the recording current equivalent section 28 is inserted next to the recording amplifier section 15, and therefore those parts already explained previously will not be described.

In Fig. 11, the recording current of the FM audio signal amplified at the recording amplifier section 15 is applied through the recording current equivalent section 28 to a switch 16. The recording current equivalent section 28, as shown in Fig. 12, has such an equivalent characteristic that the amplitude of the recording signal is increased more with the increase in the frequency of the recording current (hence the frequency of the FM audio signal).

The equivalent characteristic herein is defined as such a characteristic that the recording current is increased with the frequency by use of a high-pass filter.

When the recording current thus made equivalent by the recording signal equivalent section 28 is recorded or reproduced at the rotary heads 18, 19, the level of the FM audio signal obtained from the band-pass filter 21 is increased with the increase in the component frequency. Since the frequency band of the FM audio signal is set near to the upper limit of the recordable frequency band of the head tape system as explained above, on the other hand, the characteristic near to the upper limit of the recordable band, as shown by dashed line in Fig. 13, reduces the level of the reproduced FM audio signal with the increase in the component frequency.

If the equivalent characteristic of the recording current equivalent section 28 (Fig. 12) is properly set, the recording current equivalent section 28 functions to compensate for the level down of the reproduced FM audio signal for each of the frequency components thereof which occurs dependent on the characteristic of the head tape system, thereby flattening the frequency spectrum of the reproduced FM audio signal as shown by the solid line in Fig. 13. As a result, the envelope of the FM wave is flattened thereby to improve the signal-to-noise ratio of the audio signal reproduced.

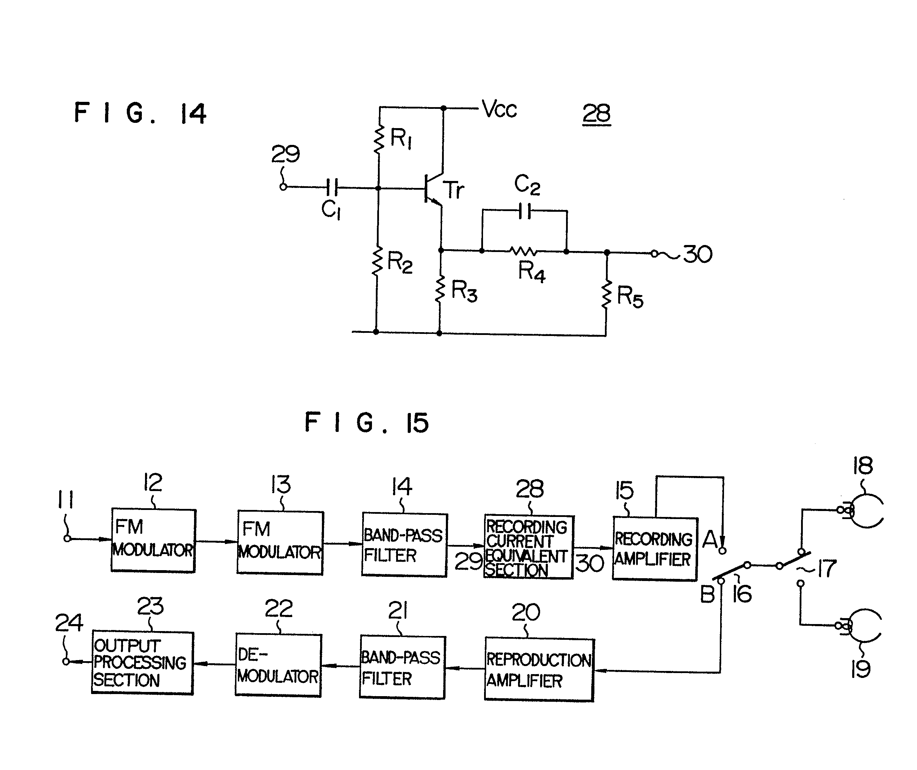

The recording current equivalent section 28 may include a frequency-dependent circuit such as a peaking circuit like a specific example shown in Fig. 14.

In Fig. 14, a transistor Tr, resistors $R_1$, $R_2$, $R_3$ and a capacitor $C_1$ make up a buffer amplifier, while resistors $R_4$, $R_5$ and a capacitor $C_2$ configure a high-pass filter. With the increase in the frequency of the recording current of the FM audio signal supplied from the input terminal 29, the impedance of the capacitor $C_2$ is reduced, and therefore, the amplitude of the recording current produced at the output terminal 30 increases with frequency.

Another embodiment of the magnetic recording-reproducing apparatus according to the present invention is shown in the block diagram of Fig. 15. The recording current equivalent section 28 inserted between the recording amplifier section 15 and the switch 16 in Fig. 11 is disposed between the band-pass filter 14 and the recording amplifier section 15 in this embodiment. This circuit has substantially the same performance as the first embodiment shown in Fig. 11.

The present invention is not limited to what is called the Hi-Fi video tape recorder described above.

It will be understood from the foregoing descriptions that according to the present invention, there is provided a magnetic recording-reproducing apparatus having superior performance, in which the envelope of the reproduced FM audio signal is flattened thereby to reproduce an audio signal of superior signal-to-noise ratio without being affected by the characteristics of the head tape system, thereby eliminating the disadvantages of the prior art apparatuses described above.

CLAIMS:

1.      In a magnetic recording-reproducing apparatus for performing recording and reproduction by frequency-modulating an audio signal and setting a frequency band near the upper limit of a recordable band, the improvement comprising a recording current equivalent section (28) for changing the amplitude of a recording current in accordance with the frequency of the frequency-modulated wave of the audio signal to be recorded thereby to maintain constant the envelope of the frequency-modulated wave of the audio signal reproduced.

2.      A magnetic recording-reproducing apparatus according to Claim 1, wherein said recording current equivalent section (28) includes a buffer amplifier (Tr, $R_1$, $R_2$, $R_3$, $C_1$) and a high-pass filter ($R_4$, $R_5$, $C_2$).

3.      A magnetic recording-reproducing apparatus according to Claim 1, wherein said recording current equivalent section (28) includes a peaking circuit.

4.      A magnetic recording-reproducing apparatus for performing recording and reproduction by frequency-modulating an audio signal and setting a frequency band near to the upper limit of a recordable band, comprising:

        an input-processing and FM modulator section (11, 12, 13) supplied with an audio signal and frequency-modulating the same audio signal;

        a first band-pass filter (14) connected to said FM modulator section (13) for eliminating the unnecessary components of the FM audio signal;

- 2 -        0170032

a recording amplifier (15) for amplifying the output of said band-pass filter (14);

a recording current equivalent section (28) supplied with the output of said recording amplifier section (15) and changing the amplitude of the recording current in accordance with the frequency of the frequency-modulated wave of the audio signal to be recorded;

switches (16, 17) for switching the output of said recording current equivalent section (28);

rotary heads (18, 19) connected to said switch (17) for recording and reproducing the FM audio signal in a magnetic tape (1);

a reproduction amplifier section (20) for amplifying the reproduced FM audio signal through said switch (16);

a second band-pass filter (21) connected to said reproduction amplifier section (20) for eliminating the unnecessary components of the FM audio signal amplified;

a demodulator section (22) for demodulating the output of said second band-pass filter (21); and

an output processing section (23) for subjecting the output of said FM demodulator section (22) to de-emphasis process.  (Fig. 11)

5.    A magnetic recording-reproducing apparatus for performing recording and reproduction by frequency-converting an audio signal and setting a frequency band near to the upper limit of a recordable band, comprising:

an input processing and FM modulating section (11, 12, 13) for frequency-modulating an audio signal applied thereto;

a first band-pass filter (14) connected to said FM modulator section (13) for eliminating the unnecessary components of the FM audio signal;

a recording current equivalent section (28) supplied with an output of said first band-pass filter (14) and changing the amplitude of the recording current in accordance with the frequency of the frequency-modulated wave of the audio signal to be recorded;

a recording amplifier section (15) for amplifying the output of said recording current equivalent section (28);

switches (16, 17) for switching the output of said recording amplifier section (15);

rotary heads (18, 19) connected to the swtich (17) for recording and reproducing the FM audio signal in a magnetic tape (1);

a reproduction amplifier section (20) for amplifying the reproduced FM audio signal through the switch (16);

a second band-pass filter (21) connected to the reproduction amplifier section (20) for eliminating the unnecessary components of the FM audio signal amplified;

an FM demodulator section (22) for demodulating the output of the second band-pass filter (21); and

an output processing section (23) for subjecting the output of the FM demodulator section (22) to de-emphasis

process (Fig. 15).

0170032

FIG. 1

# FIG. 2 PRIOR ART

# FIG. 3 PRIOR ART

# FIG. 4

# FIG. 5

1800rpm

HA 25

18 Hv

Hv

19 HA

I

26

27

A B

MAGNETIC TAPE

# FIG. 6

VIDEO
SIGNAL Y

C

b

FM
AUDIO SIGNAL

1.1 1.3 1.7 FREQUENCY (MHz)

# FIG. 7

TAPE RUNNING DIRECTION

TAPE DEPTH

Hv HA UH

dv

g λ dA

VIDEO HEAD

AUDIO HEAD

## F I G. 8

## F I G. 9

## F I G. 10

0170032

# FIG. 11

11 →| FM MODULATOR |(12)→| FM MODULATOR |(13)→| BAND-PASS FILTER |(14)→| RECORDING AMPLIFIER |(15)

RECORDING CURRENT EQUIVALENT SECTION (28) — 30

29

A, B, 16, 17, 18, 19

24 ←| OUTPUT PROCESSING SECTION |(23)←| DE-MODULATOR |(22)←| BAND-PASS FILTER |(21)←| REPRODUCTION AMPLIFIER |(20)

# FIG. 12

RECORDING CURRENT vs FREQUENCY

$f_L$  $f_H$  FREQUENCY

# FIG. 13

LEVEL vs FREQUENCY

$f_L$  $f_H$  FREQUENCY

F I G . 14

28

Vcc

R₁

29

C₁

Tr

C₂

R₂

R₃   R₄   R₅

30

F I G . 15

11  12 FM MODULATOR  13 FM MODULATOR  14 BAND-PASS FILTER  28 RECORDING CURRENT EQUIVALENT SECTION  29  30  15 RECORDING AMPLIFIER  A

18

16  B  17

19

24 OUTPUT PROCESSING SECTION  23  22 DE-MODULATOR  21 BAND-PASS FILTER  20 REPRODUCTION AMPLIFIER

## DOCUMENTS CONSIDERED TO BE RELEVANT

| Category | Citation of document with indication, where appropriate, of relevant passages | Relevant to claim | CLASSIFICATION OF THE APPLICATION (Int. Cl 4) |
|---|---|---|---|
| A | FR-A-2 518 346 (SONY) <br> * page 5, line 24 - page 6, line 36; page 18, line 31 - page 20, line 6; figures 2 3,7 * | 1,4 | G 11 B 5/035 <br> H 04 N 9/83 |
| A | EP-A-0 110 375 (HITACHI) <br> * page 7, line 7 - page 8, line 18; page 9, line 27 - page 10, line 23; page 24, line 12 - page 25, line 14; figures 1,2,10 * | 1,4 | |
| A | DE-A-3 219 957 (LICENTIA PATENT-VERWALTUNG) <br> * page 2, paragraph 1 - page 3, paragraph 1; page 4, paragraph 3 - page 5, paragraph 1; figure 1 * | 2,3 | |
| A | DE-A-3 206 449 (HITACHI) <br> * page 7, last paragraph - page 8, paragraph 2; page 11, last paragraph - page 13, paragraph 2; figures 1,5 * | 1 | **TECHNICAL FIELDS SEARCHED (Int. Cl 4)** <br><br> G 11 B 5/00 <br> H 04 N 9/00 |

The present search report has been drawn up for all claims

| Place of search | Date of completion of the search | Examiner |
|---|---|---|
| BERLIN | 16-09-1985 | WIBERGH S.R. |